(19) Europäisches Patentamt

European Patent Office

Office européen des brevets

(11) Veröffentlichungsnummer: **0 382 137 B1**

(12) **EUROPÄISCHE PATENTSCHRIFT**

(45) Veröffentlichungstag der Patentschrift: **12.01.94**

(21) Anmeldenummer: **90102211.1**

(22) Anmeldetag: **05.02.90**

(51) Int. Cl.⁵: **B65G 11/02**

(54) **Führung für Stapel von scheibenförmigen Elementen, insb. Blechdeckel für Dosen oder dgl.**

(30) Priorität: **09.02.89 DE 3903816**

(43) Veröffentlichungstag der Anmeldung:
**16.08.90 Patentblatt 90/33**

(45) Bekanntmachung des Hinweises auf die
Patenterteilung:
**12.01.94 Patentblatt 94/02**

(84) Benannte Vertragsstaaten:
**CH FR GB IT LI NL SE**

(56) Entgegenhaltungen:
**FR-A- 2 590 877**
**GB-A- 463**
**US-A- 2 010 515**
**US-A- 4 645 055**

(73) Patentinhaber: **Schmalbach-Lubeca AG**
**Schmalbachstrasse 1**
**D-38112 Braunschweig(DE)**

(72) Erfinder: **Menzel, Karl-Heinz**
**Strehlitzweg 4**
**D-3300 Braunschweig(DE)**

(74) Vertreter: **Fricke, Joachim, Dr. et al**
**Döring, Einsel, Leonhard, Fricke**
**Patentanwälte**
**Josephspitalstrasse 7**
**D-80331 München (DE)**

**Beschreibung**

Die Erfindung betrifft eine Führung von Stapel von scheibenförmigen Elementen, insb. Blechdeckel für Dosen oder dgl.

Deckel für Dosen werden jährlich in Hundertmillionen Stückzahlen hergestellt und benötigt. Obwohl es sich um einen Massenartikel handelt, sind Deckel heute hochentwickelt und unterliegen, je nach Anwendungszweck, mehreren Herstellungs- und Bearbeitungs- und Transport- und Zwischenlagerungsvorgängen. Dies gilt sowohl für die Herstellung der Deckel bis zum Verpacken dieser Deckel in Form von Deckelstapeln an der Herstellungsstätte als auch für Abfüllbetriebe, bei denen die Deckel in Stapel vom Lager oder von Vorratsbereichen mit hoher Geschwindigkeit und genauer Abstimmung auf andere Vorgänge an die Stelle der Zusammenführung mit den zugehörigen Dosen zum Zwecke des Verschließens der Dosen transportiert werden müssen. Die Transportstrecken in einem Betrieb können mehrere 100 Meter betragen. Auch muß der Transport häufig über mehrere Stockwerke auf oder ab geführt und unter Richtungswechsel durch Kurven geführt werden.

Es ist bekannt, die für diesen Transport notwendigen Führungen aus einer den Stapel aufnehmenden Rinne zu bilden, die durch einen umgekehrt schalenförmigen Käfig umkleidet ist, der aus in Längsrichtung der Führung verlaufenden Längsstangen und bogenförmigen Querstangen besteht, die die Längsstangen zusammenhalten. Derartige Führungssysteme sind relativ teuer und bedürfen eines erheblichen Aufwandes bei der Montage und der Demontage zu Wartungszwecken. Außerdem müssen die Teile dieses Führungssystems genau einjustiert werden, um einerseits eine sichere Führung zu gewährleisten und andererseits Verklemmungen zu vermeiden. Hinzu kommt, daß die gleitende Berührung der Deckel, die zumeist aus Aluminium bestehen, mit den aus dem gleichen oder anderen Materialien bestehenden Teilen des Führungssystems zu erheblichen Reibungen, zu entsprechendem Verschleiß oder Beschädigungen führen.

Es ist Aufgabe der Erfindung diese Probleme zu überwinden und eine Führung zu schaffen, die wesentlich billiger herstellbar und leichter montierbar ist und welche einen Transport der Deckelstapel wesentlich schonender als bisher ermöglicht.

Diese Aufgabe wird durch die Lehre des Anspruchs 1 gelöst.

In der bevorzugten Ausführungsform läßt sich diese Führung nach der Lehre des Anspruchs 2 einstückig und einteilig herstellen, sofern man davon absieht, daß die über mehrere zig- oder 100 Meter reichende Führung schon zur Erleichterung der Montage aus mehreren aufeinanderfolgenden Längenabschnitten zusammengesetzt ist.

Die neue Führung ist bei sehr geringem Gewicht außerordentlich formstabil und biegefest. Sie ist, insb. bei Herstellung aus Abschnitten eines Stranggießprofils z.B. aus Aluminium auch deutlich billiger herzustellen, als die bisherigen Führungssysteme.

Mit Hilfe des hohlkastenförmigen Trag- und Verbindungsabschnittes lassen sich die aufeinanderfolgenden Profilelemente leicht an entsprechenden Halterungen montieren und bei Bedarf auch demontieren, was die Handhabung wesentlich erleichtert. Eine Abdeckung bedarf der die eigentliche Führungsfläche darbietende Hohlprofilabschnitt nicht. Dies gilt insb. dann, wenn die Führungsfläche nach der Lehre des Anspruchs 3 ausgebildet ist.

Um einen direkten Kontakt der Deckelränder mit der Innenfläche des z.B. aus Aluminium hergestellten Profilelementes zu vermeiden, ist die Führungsfläche gemäß der Lehre der Ansprüche 4 und 5 auf einfache und zuverlässige Weise mit einer reibungsarmen Schicht ausgekleidet, die sich nach der Lehre des Anspruchs 5 außerordentlich einfach und schnell montieren und auch ohne Probleme bei Beschädigung oder Verschleiß auswechseln läßt.

Es stellt auch keinerlei Schwierigkeiten dar, die Profilelemente der Lehre des Anspruchs 9 entsprechend in einer beliebigen Richtung gekrümmt auszubilden, um so ohne weitere Hilfsmittel die Führung nach oben oder nach unten oder zur Seite oder in eine Schrägrichtung laufen zu lassen.

Obwohl der Hohlprofilabschnitt bei der bevorzugten Ausführung einen guten Schutz der Führungsfläche und der Deckel gegen Verschmutzung bietet, sind die Deckel in der Führung dennoch von außen zugänglich und zwar durch den verbleibenden, in Längsrichtung durchgehenden Spalt.

Bevorzugt ist das Profilelement in einer durch die Mitte des Führungskanals und durch die Mitte des diesem zugeordneten Umfangsspaltes gehenden Ebene symmetrisch ausgebildet. Der hohlkastenförmige Trag- und Verbindungsabschnitt trägt wesentlich zur Biegesteifigkeit und Formfestigkeit des Profilelementes bei.

Aufgrund der Profilgebung des Trag- und Verbindungsabschnittes können in Längsrichtung durchgehende Kanäle vorgesehen sein, die nach außen abgeschlossen sind oder durch Abdeckung des Längsschlitzes nach außen abgeschlossen werden können und so für weitere Zwecke ausnutzbar sind. So kann bei der Herstellung der Deckel, bei der nach der Ausformung der Deckel in den Deckelrand ein Dichtungscompound eingebracht wird, der Gelbildungsprozeß bzw. die Trocknung des Compounds dadurch unterstützt werden, daß über einen der Kanäle des hohlkastenförmigen Trag- und Verbindungsabschnittes eine Absaugung von Luft und Dämpfen aus dem Führungskanal erfolgt. Dazu kann der Führungskanal an geeigneten Stellen Verbindungsöffnungen zwischen dem Führungskanal und dem Absaugkanal aufweisen. Auf diese Weise wird während des Transportes der Deckel durch die Führung der Trocknungsprozeß beschleunigt. Außerdem wird dadurch verhindert, daß die beim Trocknen vom Compound freigesetzten Dämpfe in die Atmosphäre der Betriebshallen gelangen.

Am Eintrittsende und an dafür geeigneten Zwischenstellen der Länge der Führung sind Vorschubeinrichtungen für die Deckelstapel vorgesehen. Diese können aus angetriebenen Rollenpaaren mit konkavem Umfangsprofil bestehen, die beiderseits am Umfang des Stapels treibend angreifen.

Die neue Führung ist nicht nur für Deckel sondern auch für andere in Stapeln transportierbare scheibenförmige Gegenstände geeignet.

Die Erfindung wird nachfolgend anhand schematischer Zeichnungen an einem Ausführungsbeispiel näher erläutert.

Es zeigen:

Figur 1 in perspektivischer Darstellung ein gegenüber der Horizontalen geneigtes und gekrümmt verlaufendes Profilelement der Führung gemäß der Erfindung.

Figur 2 im größeren Maßstabe das Profilelement im Querschnitt und

Figur 3 schematisch und mit Blick in Förderrichtung eine in Verbindung mit der Führung verwendbare Vorschubeinrichtung für die in Stapeln transportierten scheibenförmigen Werkstücke.

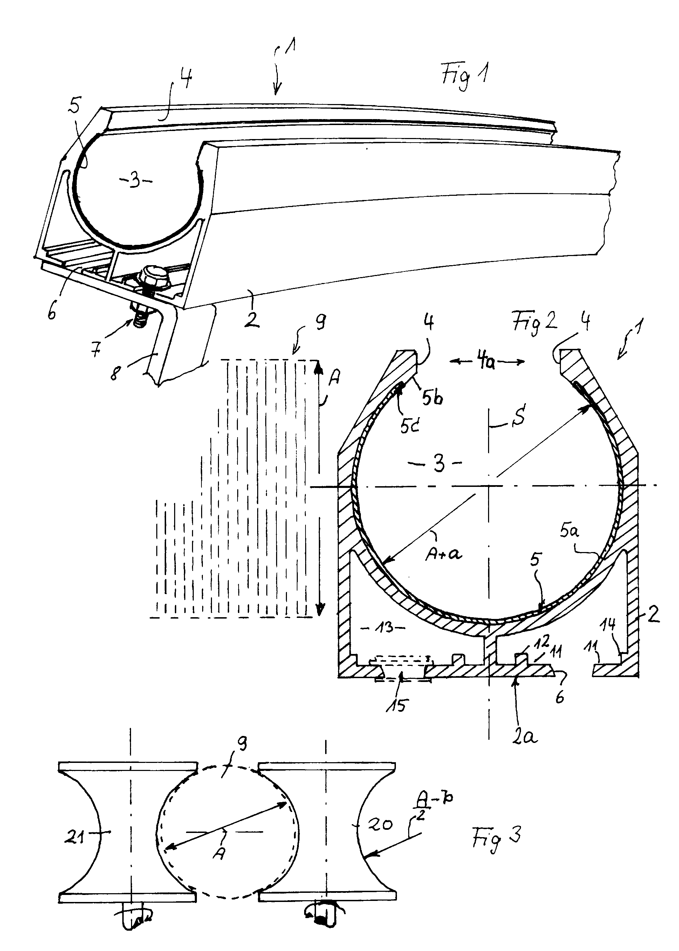

Das in den Figuren 1 und 2 ersichtliche Profilelement besteht bevorzugt aus Aluminium und kann ein Längenabschnitt von ausgewählter Länge eines entsprechenden Stranggießprofils sein.

Das Profilelement weist zwei Abschnitte auf, nämlich einen Abschnitt 3 mit einem Hohlprofil mit einer zylindrischen inneren Führungsfläche 5, die sich in Umfangsrichtung über einen Winkel deutlich größer als 180° erstreckt. In dem dargestellten bevorzugten Ausführungsbeispiel erstreckt sich die Führungsfläche 5 über einen Winkel von etwa 270°. Die Umfangsausdehnung kann aber auch davon abweichend zwischen 200° und 300° liegen. Der Hohlprofilabschnitt 3 weist einen in Längsrichtung verlaufenden Umfangsschlitz 4a auf, der von den Schenkelflächen 4 des Profils begrenzt wird. Auf diese Weise bietet der Hohlprofilabschnitt 3 nicht nur eine durchgehende einstückige Führung für den Stapel 9 aus Deckein oder dgl., sondern bietet auch einen guten Schutz der Deckel und der Führungsfläche gegen Verschmutzung.

Wie insb. aus Figur 2 hervorgeht, ist die Führungsfläche 5 über den größten Teil ihrer Umfangsausdehnung eingesenkt oder vertieft ausgebildet, wobei die Vertiefung nahe den Schenkeln 4 an hinterschnittenen Schultern 5c enden, wobei zwischen diesen und dem Schenkel 4 ein Flächenstreifen 5b der Führungsfläche 5 verbleibt. Der vertiefte Bereich der Führungsfläche 5 ist mit einer Schicht 5a aus verschleiß- und reibungsarmen Kunststoff ausgekleidet, welche die alleinige Führungs- und Kontaktfläche für den Deckelstapel 9 bildet. Geht man davon aus, daß die Deckel einen Durchmesser A aufweisen, so ist der Durchmesser der durch die Kunststoffschicht 5a gebildeten Führungsfläche geringfügig größer, wie dies durch die Angabe A + a für den Durchmesser der Führungsfläche in Figur 2 angedeutet ist. Die Bemessung erfolgt so, daß die Deckel sicher, jedoch mit ausreichendem Spiel durch den Hohlprofilabschnitt 3 laufen können, ohne daß ihre Ränder die verbleibenden Randstreifen 5b des Profils berühren.

Die Formsteifigkeit und Biegefestigkeit des Profilelementes 1 wird wesentlich unterstützt dadurch, daß der Hohlprofilabschnitt 3 einstückig und einseitig mit einem hohlkastenförmigen Trag- und Verbindungsabschnitt 2 ausgebildet ist. Dieser weist dem Spalt 4a abgewandt liegend eine ebene Montagefläche 2a auf. Aus Figur 2 ist ersichtlich, daß das Profilelement im Querschnitt zu der Ebene S symmetrisch ausgebildet ist, wobei die Ebene S durch die Mitte des Hohlprofilabschnittes 3 und durch die Mitte des Spaltes 4a läuft. In dieser Ebene S weist der Trag- und Verbindungsabschnitt 2 einen inneren Mittelsteg auf, der das Innere des hohlkastenförmigen Profils in zwei in Längsrichtung verlaufende Kanäle unterteilt. Jeder Kanal 13 weist in der Montageebene 2a einen Längsschlitz 6 auf, dessen Begrenzungen abgeschrägt oder hinterschnitten sind. Im Inneren können die Montage erleichternde Abstufungen 11, 14 und Längsstege 12 vorgesehen sein. Auf diese Weise läßt sich jedes Profilelement leicht und schnell montieren und demontieren, z.B., wie Figur 1 zeigt, mit Hilfe eines in den Schlitz 6 eingefädelten Befestigungselementes 7 an einem gestellfesten Halter 8.

Der eine oder der andere der beiden Längskanäle 13 kann auch, wie in Fig. 2 angedeutet ist, nach außen durch Verschließen des Längsschlitzes 6 durch eine Abdeckung 15 als geschlossener Absaugkanal zum Durchsaugen von Luft durch den Stapel und Absaugen von beim Aushärten eines in die Deckel eingebrachten Dichtungscompounds entstehenden Dämpfe ausgebildet sein.

Die Auskleidung 5a läßt sich auf besonders einfache und billige Weise vorsehen. In einem bevorzugten Ausführungsbeispiel besteht die Auskleidung aus einer gesondert hergestellten und von der Herstellung ebenen Tafel oder einem fortlaufenden Band aus Kunststoff mit einer Dicke von beispielsweise etwa 1 mm. Die Breite des Kunststoffmaterials wird so bemessen, daß sich beim Einlegen des Materials in den Hohlprofilabschnit 3 das Kunststoffmaterial satt an die Führungsfläche 5 anlegt, wobei die Ränder des Kunststoffmaterials die Schultern 5c praktisch spielfrei hintergreifen. Das Kunststoffmaterial ist elastisch biegsam und behält aufgrund der Abstützung an den Schultern 5c und aufgrund seiner in Richtung auf die ebene Ausgangslage wirkenden Rückstellkräfte seine satte Anlage an der Führungsfläche 5 unter allen Umständen bei, ohne daß es in jedem Fall notwendig ist, die Auskleidung durch Kleben oder Siegeln oder dgl. an der Führungsfläche 5 haftend zu befestigen. Dies vereinfacht die Herstellung und die Montage und vor allem auch das Auswechseln von durch Verschleiß oder Beschädigung unbrauchbaren Auskleidungsabschnitten.

Der Stapel 9 aus Deckeln wird in die Führung 1 mit Hilfe von Vorschubeinrichtungen eingeschoben, wobei an ausgewählten Stellen über die Länge der Führung weitere Vorschubeinrichtungen gleicher Art eingeschaltet werden können. Eine geeignete Vorschubeinrichtung für die Zwecke der Erfindung zeigt die Figur 3. Hier erfolgt der Vorschub durch zwei gegenläufig rotierende und auf entgegengesetzten Seiten des Stapels 9 angreifende Rollen 20, 21, deren Umfangsfläche ein konkaves Profil aufweisen. Der Radius, der das Umfangsprofil der Rollen 20 und 21 bestimmt, ist geringfügig kleiner als der halbe Durchmesser A der Deckel oder des Stapels 9, wie dies in Figur 3 durch die Angabe für den Radius = $\frac{A}{2}$ - b angedeutet ist. Die Rollen können aus Kunststoff oder Gummi bestehen oder auf ihrem Umfang mit Kunststoff beschichtet sein, um so die notwendige Vorschubkraft schonend auf den Stapel übertragen zu können.

**Patentansprüche**

1. Führung für Stapel von scheibenförmigen Elementen, insb. Blechdeckel für Dosen oder dgl., dadurch **gekennzeichnet**, daß sie ein oder mehrere stirnseitig aneinander anschließbare langgestreckte Profilelemente (1) aufweist, die jedes im Querschnitt aus einem Hohlprofilabschnitt (3) mit zylindrischer innerer Führungsfläche (5) von einer Umfangsausdehnung größer als 180° und einem hohlkastenförmigen Trag- und Verbindungsabschnitt (2) besteht.

2. Führung nach Anspruch 1, dadurch **gekennzeichnet**, daß das oder jedes Profilelement (1) jeweils aus einem Längenabschnitt eines den Hohlprofilabschnitt (3) und den Trag- und Verbindungsabschnitt (2) einstückig umfassenden Stranggießprofils, insb. aus Aluminium besteht.

3. Führung nach Anspruch 1 oder 2, dadurch **gekennzeichnet**, daß sich die zylindrische innere Führungsfläche (5) über einen Winkel zwischen 200° und 300°, vorzugsweise über einen Winkel von etwa 270° erstreckt.

4. Führung nach einem der Ansprüche 1 bis 3, dadurch **gekennzeichnet**, daß die zylindrische innere Führungsfläche (5) mit einer Schicht (5a) aus einem reibungsarmen Kunststoff ausgekleidet ist.

5. Führung nach Anspruch 4, dadurch **gekennzeichnet,** daß die zylindrische innere Führungsfläche (5) bis auf schmale Randbereiche (5b) vertieft und mit hinterschnittenen Schultern (5c) ausgebildet ist und in die Vertiefung eine von der Herstellung ebene Kunststoffplatte (5a) - vorzugsweise verklebungsfrei - eingelegt und mit ihren Längsrändern an den hinterschnittenen Schultern (5c) abgestützt ist.

6. Führung nach einem der Ansprüche 1 bis 5, dadurch **gekennzeichnet**, daß der hohlkastenförmige Trag- und Verbindungsabschnitt (2) in einer Auflagefläche (2a) wenigsens eine Längsnut oder einen Längsschlitz (6) zur Aufnahme von Befestigungselementen (7) oder dgl. aufweist.

7. Führung nach Anspruch 6, dadurch **gekennzeichnet**, daß der Trag- und Verbindungsabschnitt (2) zu der Symmetrieebene (S) des Hohlprofilabschnittes (3) symmetrisch ausgebildet ist.

8. Führung nach Anspruch 6 oder 7, dadurch **gekennzeichnet**, daß der Trag- und Verbindungsabschnitt (2) wenigstens einen geschlossenen oder schließbaren (15) Absaugkanal (13) aufweist.

9. Führung nach einem oder mehreren der Ansprüche 1 bis 8, dadurch **gekennzeichnet**, daß das Profilelement (1) - von der Geradlinigkeit abweichend - nach unten, nach oben zu der einen oder der anderen Seite hin oder in einer ausgewählten Zwischenrichtung stetig gekrümmt ausgebildet ist.

**Claims**

1. Guide for a stack of disc-like elements, in particular sheet-metal lids for jars or the like, characterised in that the guide has one or more elongate profile elements (1) capable of abutting one another at their end faces and each consisting, in cross-section, of a hollow profile section (3) with a cylindrical inner guide face (5) having a circumference extending over more than 180°, and of a hollow box-like carrying and connecting section (2).

2. Guide according to claim 1, characterised in that the, or each, profile element (1) consists of a respective longitudinal section of an extruded profile, in particular of aluminium, comprising the hollow profile section (3) and the carrying and connecting section (2) in one piece.

3. Guide according to claim 1 or 2, characterised in that the cylindrical inner guide face (5) extends over an angle of between 200° and 300°, preferably over an angle of approximately 270°.

4. Guide according to one of claims 1 to 3, characterised in that the cylindrical inner guide face (5) is clad with a layer (5a) of low-friction plastics material.

5. Guide according to claim 4, characterised in that the cylindrical inner guide face (5) is recessed, leaving only narrow edge regions (5b), and is formed with undercut shoulders (5c), and a plastics plate (5a) which is manufactured in planar form, and preferably adhesion-free, is inserted in the recess and is supported with its longitudinal edges on the undercut shoulders (5c).

6. Guide according to one of claims 1 to 5, characterised in that the hollow box-shaped carrying and connecting section (2) has at least one longitudinal groove or longitudinal slot (6) in a contact face (2a) for receiving fixing elements (7) or the like.

7. Guide according to claim 6, characterised in that the carrying and connecting section (2) is formed symmetrically about the plane of symmetry (S) of the hollow profile section (3).

8. Guide according to claim 6 or 7, characterised in that the carrying and connecting section (2) has at least one closed or closable (15) extraction channel (13).

9. Guide according to one or more of claims 1 to 8, characterised in that the profile element (1), deviating from the rectilinear, curves steadily downwards or upwards, to one side or the other, or in a selected direction in between.

**Revendications**

1. Système de guidage pour piles d éléments discoïdaux, notamment de couvercles en tôle pour boîtes métalliques ou objets similaires caractérisé par le fait qu'il présente un ou plusieurs élément(s) profilé(s) (1) qui s'étend(ent) en longueur et peu(ven)t être raccordé(s) frontalement, et dont chacun se compose, en coupe transversale, d'un segment (3) à profil creux comportant une surface cylindrique intérieure de guidage (5) ayant une étendue périphérique supérieure à 180°, et d'une région (2) de support et de liaison configurée en un caisson creux.

2. Système de guidage selon la revendication 1, caractérisé par le fait que le ou chaque élément profilé (1) consiste respectivement en un segment longitudinal d'un profilé venu de coulée continue, notamment en aluminium, qui regroupe d'une seule pièce le segment (3) à profil creux et la région (2) de support et de liaison.

3. Système de guidage selon la revendication 1 ou 2, caractérisé par le fait que la surface cylindrique intérieure de guidage (5) s'étend sur un angle compris entre 200° et 300°, de préférence sur un angle d'environ 270°.

4. Système de guidage selon l'une des revendications 1 à 3, caractérisé par le fait que la surface cylindrique intérieure de guidage (5) est revêtue d'une couche (5a) en une matière plastique à faible frottement.

5. Système de guidage selon la revendication 4, caractérisé par le fait que la surface cylindrique intérieure de guidage (5) est de réalisation renfoncée, à l'exception d'étroites régions marginales (5b), et est munie d'épaulements contre-dépouillés (5c) ; et une plaque (5a) en matière plastique, aplatie au stade de sa fabrication, est insérée dans le renfoncement - de préférence sans collage - et prend appui, par ses bords longitudinaux, sur les épaulements contre-dépouillés (5c).

6. Système de guidage selon l'une des revendications 1 à 5, caractérisé par le fait que la région (2) de support et de liaison configurée en un caisson creux présente, dans une surface de contact (2a), au moins une gorge longitudinale ou une fente longitudinale (6) pour recevoir des éléments de fixation (7) ou éléments similaires.

7. Système de guidage selon la revendication 6, caractérisé par le fait que la région (2) de support et de liaison est de réalisation symétrique par rapport au plan de symétrie (S) du segment (3) à profil creux.

8. Système de guidage selon la revendication 6 ou 7, caractérisé par le fait que la région (2) de support et de liaison présente au moins un canal d'aspiration (13) fermé ou obturable (15).

9. Système de guidage selon l'une ou plusieurs des revendications 1 à 8, caractérisé par le fait que l'élément profilé (1) - s'écartant de l'allure rectiligne - est réalisé à courbure constante vers le bas, vers le haut, vers l'un ou l'autre côté ou dans une direction intercalaire sélectionnée.

Fig 1

Fig 2

Fig 3